(19) Europäisches Patentamt
European Patent Office
Office européen des brevets

(11) Veröffentlichungsnummer: **0 002 758**
**B1**

(12) **EUROPÄISCHE PATENTSCHRIFT**

(45) Veröffentlichungstag der Patentschrift: **29.04.81**

(51) Int. Cl.³: **C 08 F 10/02, C 08 F 4/72**

(21) Anmeldenummer: **78101729.8**

(22) Anmeldetag: **16.12.78**

(54) **Verfahren zur Polymerisation von Äthylen.**

(30) Priorität: **29.12.77 DE 2758779**

(43) Veröffentlichungstag der Anmeldung:
**11.07.79 Patentblatt 79/14**

(45) Bekanntmachung des Hinweises auf die Patenterteilung:
**29.04.81 Patentblatt 81/17**

(84) Benannte Vertragsstaaten:
**BE DE FR GB IT**

(56) Entgegenhaltungen:
**DE - A - 2 164 482**
**FR - A - 2 094 611**

(73) Patentinhaber: **BAYER AG**
**Zentralbereich Patente, Marken und Lizenzen**
**D-5090 Leverkusen 1, Bayerwerk (DE)**

(72) Erfinder: **Mietzsch, Fritz, Dr.**
**Mindener Strasse 4**
**D-5000 Koeln 21 (DE)**
Erfinder: **Rudolph, Hans, Dr.**
**Haydnstrasse 9**
**D-4150 Krefeld (DE)**
Erfinder: **Wolfers, Heinrich, Dr.**
**Niederend 6**
**D-4137 Rheurdt (DE)**
Erfinder: **Alberts, Heinrich, Dr.**
**Morgengraben 16**
**D-5000 Koeln 80 (DE)**

**EP 0 002 758 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Verfahren zur Polymerisation von Äthylen

Die Erfindung betrifft ein Verfahren zur Polymerisation von Äthylen in Gegenwart von oligomeren Pinakolsilyläthern als Intitiatoren.

Äthylen wird prinzipiell nach zwei verschiedenen Verfahren polymerisiert, die beide industriell im grôen Maßstab durch geführt werden (s. Vieweg, Schley, Schwarz in Kunststoff-Handbuch IV, Polyolefine, Hanser Verlag 1969, 39 ff.).

Beim ersten Verfahren — dem sog. Hochdruckverfahren — wird Äthylen unter hoher Temperatur und hohem Druck polymerisiert, beispielsweise oberhalb 125°C und oberhalb 500 atm, insbesondere bei 140—300°C und 1000—3000 atm und darüber. Zur Initiierung der Polymerisation werden Substanzen zugegeben, die unter diesen Bedingungen freie Radikale bilden. Als Initiatoren kommen im wesentlichen Sauerstoff, Peroxide oder Azoverbindungen in Frage. Bei diesem Verfahren erhält man ein hochwertiges Polyäthylen mit einem Schmelzpunkt von nur ca. 110—115°C und eine Dichte von 0,92—0,935 g/cm$^3$.

Hochkristallines unverzweigtes Polyäthylen mit einer Dichte von 0,95—0,96 g/cm$^3$ wird durch Polymerisation bei Temperaturen unter 100°C, vorzugsweise im Bereich von 50—80°C, und bei niedrigem Druck, beispielsweise 10 atm oder sogar atmosphärischem Druck, in Gegenwart von Organometallverbindungen, die als Ziegler-Katalysatoren bezeichnet werden, erhalten. Der Ausdruck "Ziegler-Katalysator" bezeichnet eine Kombination aus einer Verbindung eines Übergangsmaterials der Nebengruppen IVa—VIa des Periodensystems und aus einer Organometallverbindung eines Metalls der Gruppen I—III des Periodensystems der Elemente. Ein weit verwendetes Ziegler-Katalysator-System basiert auf einer Titanverbindung, beispielsweise Titantetrachlorid oder Titantrichlorid und auf einer Aluminiumverbindung, beispielsweise Aluminiumtriäthyl oder Aluminiumdiäthylchlorid. Da solche Katalysatoren durch Verunreinigungen wie z.B. Alkohole, Amine, Wasser usw. zersetzt werden, erfordert dieses Verfahren eine hohe Reinheit der Anlagen und extrem sauberes Äthylen als Ausgangsprodukt.

In der GB-A-828 828 wird ein Verfahren zur Polymerization von Olefinen, insbesondere Äthylen, bei einer Temperatur von mindestens 175°C und einem Druck von mindestens 500 at beschrieben. Das so hergestellte Polyäthylen weist Dichten bis 0,95 g/cm$^3$ auf. Das Verfahren erfordert aber wie das Niederdruckverfahren Ziegler-Katalysatoren.

Nach Untersuchungen von C. A. Mortimer und W. F. Hammer, J. Polym. Sci. A 2/3, 1301 (1964) sind Verzweigungsgrad und Dichte des Hochdruckpolyäthylens weitgehend von der Art des verwendeten Radikalbildners unabhängig und werden im wesentlichen nur durch den Äthylendruck und die Reaktionstemperatur beeinflußt. Daher wird die Auswahl geeigneter Initiatoren weitgehend von wirtschaftlichen Aspekten bestimmt. Es werden daher bevorzugt hochreaktive Initiatoren wie z.B. Perester oder Percarbonate verwendet. Diese Starter neigen beim Erwärmen oder in Gegenwart katalytisch wirkender Verunreinigungen zu spontaner exothermer Zersetzung und erfordern somit umfangreiche sicherheitstechnische Vorsichtsmaßnahmen.

Als gefahrlos handhabbare Initiatoren für eine Veilzahl radikalischer Polymerisationsreaktionen haben sich hochsubstituierte Äthanderivate erwiesen die in der Hitze unter Spaltung der C—C—Einfachbindung in Radikale zerfallen. Diese Primärradikale reagieren sofort mit den Doppelbindungen — wie z.B. bei den in der DE-A-2 545 451, 2 444 252 und US—PS 3 896 099 beschriebenen Initiatoren — oder übertragen Wasserstoffradikale auf die Monomeren — wie z.B. bei den in DE-B-1 216 877 beschriebenen und von D. Braun, K. H. Becker, die Makromolekulare Chemie *147* (1971) 91, genau untersuchten Pinakolderivaten.

Für die Polymerisation von Äthylen konnten sich diese Initiatoren aber nicht durchsetzen, da sie entweder erst bei hohen Temperaturen in Radikale zerfallen, als schlecht verarbeitbare Festprodukte vorliegen, schwer herstellbar sind oder aber eine geringe Polymerisationsgeschwindigkeit zeigten.

In der DE-A-2 164 482 und in der FR-A-20 946 11 werden Silyläther von Tetraaryl- bzw. Tetraarylalkyl-1,2-glykolen zur radikalischen Polymerisation von aromatischen Vinylverbindungen, vorzugsweise Styrol, verwendet.

Überraschenderweise wurde nun gefunden, daß Äthylen bei einer Temperatur von wenigstens 100°C, vorzugsweise 130—300°C, bei einem Druck von mehr als 203 bar, vorzugsweise 709—3040 bar, gefahrlos, und geringer Verzögerung und in guten Ausbeuten in Gegenwart von Silyläthern vorzugsweise ologomeren Pinakolsilyläther als Initiatoren polymerisiert werden kann.

Gegenstand der vorliegenden Erfindung ist somit ein Verfahren zur Homo- oder Copolymerisation von Äthylen gegebenenfalls in Anwesenheit eines Lösungsmittels bei Temperaturen von wenigstens 100°C, vorzugsweise 130—300°C, und einem Druck von 203—3546 bar, vorzugsweise 700—3000 atm, und Silyläthern als Initiatoren, dadurch gekennzeichnet, daß als Initiatoren Silyläther der Formel I verwendet werden

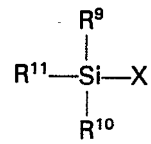

(I)

worin

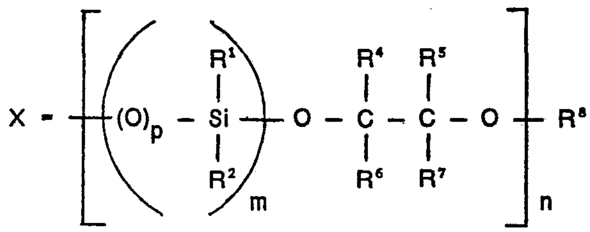

mit

$R^1$ Methyl, Äthyl, Phenyl, Benzyl, Chlormethyl,

$R^2$ Chlor, Hydroxyl, Methoxy, Äthoxy oder $R^1$

$R^4$, $R^5$ gleich oder verschieden, gegebenenfalls durch $C_1$—$C_4$-Alkyl (vorzugsweise Methyl), Methoxy, Chlor oder Fluor substituierte Arylreste (vorzugsweise Phenyl, Tolyl, p-tert.-Butyl-phenyl, o- und p-Chlorphenyl, 2,4-Dichlorphenyl, Naphthyl, Biphenylyl oder m-Methoxyphenyl),

$R^6$, $R^7$ gleich oder verschieden, entweder $R^4$ bzw. $R^5$ oder gegebenenfalls durch $C_1$—$C_4$-Alkyl (vorzugsweise Methyl), Methoxy, Chlor oder Fluor subsitutierte Alkylreste mit 1—6 C-Atomen (vorzugsweise Methyl, Äthyl oder Isopropyl), Cycloalkylreste mit 5—7 C-Atomen (vorzugsweise Cyclohexyl) oder Wasserstoff,

$R^8$ Wasserstoff oder einen Silylrest der Formel II

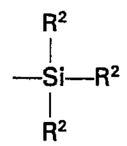

(II)

in der $R^2$ die oben angegebene Bedeutung hat,

n für eine ganze Zahl von 1 bis 20,

m für eine ganze Zahl von 0 bis 10 und p für oder 1,

$R^9$ und $R^{10}$, gleich oder verschieden, $R^2$ oder X und

$R^{11}$ Chlor, Hydroxy, Methoxy, Äthoxy oder X bedeuten.

Die Pinakolsilyläther werden durch Reaktion von unedlen Metallen, vorzugsweise von Metallen der 1. und 2. Hauptgruppe des Periodensystems der Elemente von Mendelijeff, insbesondere von Lithium, Natrium, Kalium, Magnesium oder Calcium, sowie Aluminium, mit $\alpha$-Arylketonen oder Arylaldehyden und Di-, Tri- oder Tetrachlororganosilanen, chlorierten Polyorganosilanen oder -siloxanen in einem inerten Lösungsmittel hergestellt.

Geeignete inerte aprotische Lösungsmittel zur Herstellung der Starter sind z.B. Aromaten und Alkylaromaten wei Benzol und Toluol, Äther wie Diäthyläther, Diisopropyläther, Dibutyläther, Anisol, Tetrahydrofuran, Dioxan, 1,2-Dimethoxyäthan, Trialkylphosphate wie Triäthylphosphat, Tributylphosphat; N, N-disubstituierte Amide wie Dimethylformamid, N,N-Dimethylacetamid und Phosphorsäuretris-(dimethylamid). Weitere geeignete Lösungsmittel sind in Methoden der Organischen Chemie (Houben-Weyl), Bd. XIII/2 a, S. 59—70, Georg Thieme-Verlag, Stuttgart 1973, beschrieben. Als besonders geeignet erwiesen sich Lösungsmittelgemische aus a) 0—80 Gew.-Teilen Benzol oder Toluol, b) 2—98 Gew.-Teilen Tetrahydrofuran und c) 0—98 Gew.-Teilen Triäthylphosphat oder Phosphorsäuretris-(dimethylamid), wobei a) + b) + c) immer 100 Gew.-Teile ergibt.

Die oligomeren Pinakolsilyläther weisen ein als Zahlenmittel bestimmtes Molekulargewicht Mn von 500—12000, vorzugsweise von 2000 bis 8000, auf.

Das Molekulargewicht der erfindungsgemäßen Silyläther, wird bis zu einem Molekulargewicht von 3000 dampfdruckosmometrisch, bei einem Molekulargewicht oberhalb 300 0 membranosmometrisch, jeweils in Aceton als Lösungsmittel, bestimmt. Die Molekulargewichte einzelner Fraktionen der erfindungsgemäßen Reaktionsgemische lassen sich gelchromatographisch (mittels Eichsubstanzen) bestimmen.

Als Beispiele für die als Ausgangsmaterialien einzusetzenden Aldehyden bzw. Ketone und Silane werden im folgenden verschiedene Reaktionspartner ausgeführt:

| | (A) | (B) | (C) |
|---|---|---|---|
| 1) | Magnesium | Benzaldehyd | Trichlormethylsilan |
| 2) | Magnesium | Benzaldehyd | Trichlorphenylsilan |
| 3) | Magnesium | Benzaldehyd | Dichlordimethylsilan |
| 4) | Magnesium | Acetophenon | Trichlormethylsilan |
| 5) | Natrium | Acetophenon | Diphenyldichlorsilan |
| 6) | Magnesium | Propiophenon | Trichlormethylsilan |
| 7) | Lithium | Isopropylphenylketon | Trichlormethylsilan |
| 8) | Magnesium | Cyclohexylphenylketon | Trichlormethylsilan |
| 9) | Magnesium | Benzophenon | Trichlormethylsilan |
| 10) | Magnesium | Benzophenon | Dichlordimethylsilan |
| 11) | Natrium | Benzophenon | Trichlorphenylsilan |
| 12) | Lithium | 4,4-Dimethylbenzophenon | Trichlormethylsilan |
| 13) | Kalium | Benzophenon | Dichlordiphenylsilan |
| 14) | Calcium | 4-t-Butylbenzophenon | Trichlormethylsilan |
| 15) | Magnesium | 4-Chlorbenzophenon | Trichlormethylsilan |
| 16) | Natrium | 2-Methylbenzophenon | Dichlordimethylsilan |
| 17) | Magnesium | 2-Chlorbenzophenon | Trichlormethylsilan |
| 18) | Magnesium | 2,4-Dichlorbenzophenon | Trichloräthylsilan |
| 19) | Magnesium | 3-Methoxybenzophenon | Dichloräthoxymethylsilan |
| 20) | Magnesium | Naphthylphenylketon | Trichlormethylsilan |
| 21) | Magnesium | 4-Phenylbenzophenon | Trichlormethylsilan |
| 22) | Magnesium | 4-Benzoylbenzophenon | Trichlormethylsilan |
| 23) | Magnesium | Benzaldehyd | Tetrachlorsilan |
| 24) | Aluminium | Acetophenon | 1,2-Dichlortetramethyldisilan |
| 25) | Magnesium | Acetophenon | Tetrachlorsilan |
| 26) | Aluminium | Isopropylphenylketon | 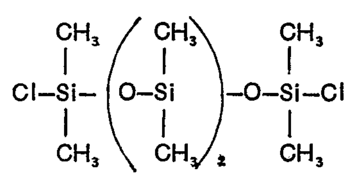 |
| 27) | Magnesium | Benzophenon | Tetrachlorsilan |
| 28) | Magnesium | Benzophenon | 1,1,2-Trichlortrimethyldisilan |

| | | | |
|---|---|---|---|
| 29) | Aluminium | Benzophenon | 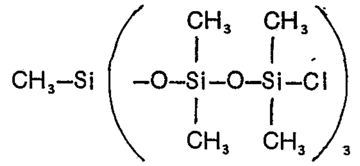 |
| 30) | Natrium | 2-Chlorbenzophenon | 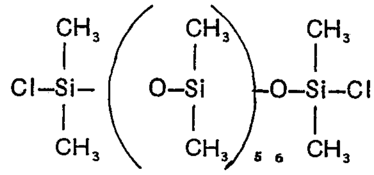 |
| 31) | Magnesium | 3-Methoxybenzophenon | 1,2,3,4-Tetrachlorhexamethylentetrasilan |
| 32) | Lithium | 4-tert.Butylbenzophenon | 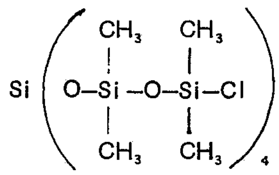 |

Überraschenderweise wurde gefunden, daß nach dem erfindungsgemäßen Verfahren hergestellte Polyäthylen höhere Dichten, einen geringeren Verzweigungsgrad und eine höhere Reißdehnung aufweisen als unter vergleichbaren Bedingungen peroxidisch polymerisierte Hochdruckpolyäthylen.

Die erfindungsgemäß hergestellten Polyäthylen können somit in Bereichen eingesetzt werden, in denen bisher nur nach dem Ziegler-Verfahren hergestelltes Niederdruckpolyäthylen verwendet werden könnten.

Zur Durchführung der Polymerisation werden 0,001—10 Gew.-%, vorzugsweise 0,01—2,0 Gew.-%, bezogen auf die Menge der eingesetzten Monomeren, eines ologomeren Pinakolsilyläthers eingesetzt. Die Pinakolsilyläther können in Substanz, bevorzugt in Lösung, zugegeben werden. Als Lösungsmittel seien angeführt: niedere Alkohole wie z.B. Methanol, Äthanol Isopropanol, tert. Butanol, Carbonsäureester wie z.B. Essigsäureester, Äther wie z.B. Diäthylläther, Dibutyläther, Anisol, Tetrahydrofuran, Dioxan und 1,2-Dimethoxyäthan, Aromaten und Alkylaromaten wie z.B. Benzol, Toluol oder Xylol, gerad- oder verzweigtkettige Paraffine wie z.B. Petroläther und Leichtbenzin, Cycloaliphaten wie z.B. Cyclohexan und Dekalin, Trialkylphosphate wie z.B. Triäthylphosphat, N,N-disubstituierte Amide, wie z.B. N,N-Dimethylacetamid und Hexamethylphosphorsäuretriamid oder Lösungsmittelgemische.

Das erfindungsgemäße Verfahren kann diskont. oder aber bevorzugt kontinuierlich in Rührkessel- oder Röhrenreaktoren ausgeführt werden. Nach Beendigung der Polymerisation wird das im Reaktor oder in den Reaktoren gebildete Polymer von dem nichtumgesetzten Äthylen abgetrennt und nach den üblichen Verfahren aufgearbeitet. Das nichtumgesetzte Äthylen wird mit frischem Äthylen gemischt und zum Reaktor zurückgeführt.

Das erfindungsgemäße Verfahren kann ohne oder in Gegenwart von Lösungsmitteln durchgeführt werden. Als Lösungsmittel für die Äthylenpolymerisation seien genannt niedere Alkohole wie z.B. Methanol, Äthanol, tert. Butanol, Carbonsäurester wie z.B. Essigester, aromatische Kohlenwasserstoffe wie z.B. Benzol, Toluol, Xylol oder gerad- oder verzweigtkettige Parafinne wie z.B. Petroläther, Leichtbenzin oder andere Benzinfraktionen, Cycloaliphaten wie z.B. Cyclohexan oder Lösungsmittelgemische. Wenn unter Verwendung von Lösungsmitteln gearbeitet wird, sind Kohlenwasserstoffe bevorzugt.

Zur Verminderung des Molekulargewichtes und somit zur Erhöhung des Schmelzindex kann das erfindungsgemäße Verfahren auch in Gegenwart von Kettenüberträgern wie z. B. Mercaptanen durchgeführt werden. Da das Molekulargewicht ferner durch die Reaktionsbedingungen, vorzugsweise Temperatur und Druck, gesteuert werden kann, ist es möglich, die Eigenschaften des Polyäthylens in weiten Bereichen zu variieren.

Das erfindungsgemäße Verfahren kann auch zur Herstellung von Copolymerisaten das Äthylen mit anderen $\alpha,\beta$ ungesättigten Monomeren wie z.B. (Meth)-Acrylsäure, (Meth)-Acrylsäureester oder Vinylacetat angewendet werden. In die Polyäthylene bzw. -Copolymerisate, die gemäß der Erfindung hergestellt worden sind, können nach Bedarf verschiedene Zusätze eingemischt werden, wie z.B. Antioxydantien, UV-Stabilisatoren, Schwefelverbindungen, Phosphorverbindungen, Farbstoffe, Pigmente, Füllstoffe und antistatische oder flammhemmende Mittel in üblichen Mengen.

Die nach dem erfindungsgemäßen Verfahren hergestellten Äthylen- Homo- und Copolymerisate können nach den üblichen Verfahren der Polyäthylenverarbeiter zu Folien, vorzugsweise für den Verpackungssektor, zu Beschichtungszwecken, zu Spritzgußartikeln und auf Extrusionsmaschinen zu Platten z.B. für Tiefziehverformung oder für gestanzte Formkörper verarbeitet werden.

Beispiel 1

Ein 1000-ml-Rührautoklav, der einen Dosieraufsatz von 20 ml mit Absperrventil trägt, wurde mit 200 ml Cyclohexan beschickt. In den Dosieraufsatz wurde 200 mg des oligomeren Benzpinakolsilyläthers — hergestellt durch Reaktion von Benzophenon mit Magnesium und Trichlormethylsilan; mit einem osmometrisch bestimmten Zahlenmittel $M_n$ des Molekulargewichts von 1400 — als Lösung in 10 ml Cyclohexan, gegeben. Dann entfernte man sorgfältig alle Luft aus dem Reaktor durch mehrfaches Evakuieren und Spülen mit Äthylen. Bei Raumtemperatur wurde hochreies Äthylen bis zu einem Druck von 400 bar aufgepreßt. Dann steigerte man die Temperatur auf 130°C und brachte den Innendruck durch weiteres Nachpressen von Äthylen auf 1000 bar. Nachdem der Gleichgewichtszustand erreicht war, wurde der Inhalt des Dosieraufsatzes mit Äthylen in den Autoklaven gedrückt. Die Reaktion trat alsbald ein, erkennbar an einem raschen Abfall des Reaktorinnendrucks. Durch Nachpressen von Äthylen wurde jedoch einem größeren Druckabfall vorgebeugt. Nach 60 Min. Reaktionszeit kühlte man ab, entspannte und öffnete den Reaktor, um das entstandene pulverförmige Äthylenpolymer zu entnehmen. Es wurde bei 50°C im Vakuum bis zu Gewichtskonstanz getrocknet. Erhalten wurden 176 g Polymerisat mit einer Grenzviskositätszahl $[\eta]=0{,}52$ dl/g, gemessen in Tetralin bei 120°C*. Die Dichte des Polymeren betrug 0,942 g/ml.

Beispiel 2

Man verfuhr wie in Beispiel 1; verwendete jedoch als Initiator einen oligomeren Acetophenonpinakolsilyläther, hergestellt durch Reaktion von Acetophenon mit Magnesium und Trichlormethylsilan und einem Zahlenmittel $M_n$ des Molekulargewichts von 1100. Ferner polymerisierte man abweichend bei 180°C. Man erhielt 189 g Polymeres, mit einer Grenzviskositätszahl $[\eta]$ 0,38 dl/g, bestimmt wie im Beispiel 1, und einer Dichte 0,938 g/ml.

Beispiel 3

Ein 150-ml-Hochdruckreaktor zur kontinuierlichen Äthylenpolymerisation mit einer effektiven Rührvorrichtung wurde stündlich mit 520 g Äthylen beschickt. Unmittelbar vor dem Reaktoreintritt dosierte man 470 mg/h des Initiators aus Beispiel 1 als 20 %ige Lösung in Cyclohexan in den Äthylenstrom ein. Durch äußere Wärmezufuhr und durch Justierung des Druckhalteventils am Reaktorausgang wurden eine Innentemperatur von 182°C und ein Innendruck von 1780 bar eingestellt. Aus der Entspannvorlage konnten stündlich 58 g Polymer entnommen werden. Die Grenzviskositätszahl betrug $[\eta]$ 0,78 dl/g, die Dichte 0,939 g/ml.

Beispiel 4

Durch den Reaktor, wie in Beispiel 3 beschrieben, wurden stündlich 380 g Äthylen und 40 g Vinylacetat unter den in Beispiel 3 angegebenen Bedingungen geleitet. Man erhielt stündlich 47 g eines Copolymers mit 9,8 Gew.-% Vinylacetateinheiten; mit einer Grenzviskositätszahl $[\eta]$ 0,69 dl/g*) und der Dichte 0,948 g/ml.

*) W. Hoffman, H. Krömer und R. Kuhn in "Polymeranalytik 1", Georg Thieme Verlag, Stuttgart 1977

**Patentansprüche**

1. Verfahren zur Herstellung von Homo- oder Copolymerisaten des Äthylens durch radikalische Polymerisation bei Temperaturen von wenigstens 100°C, einem Druck von 203—3546 bar und Silyläthern als Initiatoren, gegebenenfalls in Anwesenheit eines Lösungsmittels, dadurch gekennzeichnet, daß als Silyläther solche der Formel I verwendet werden

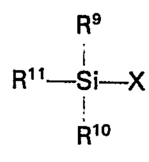

(I)

worin

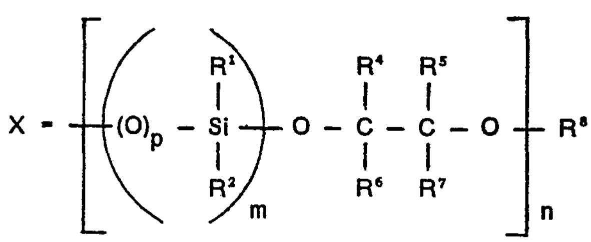

mit

$R^1$ Methyl, Äthyl, Phenyl, Benzyl, Chlormethyl,
$R^2$ Chlor, Hydroxyl, Methoxy, Äthyoxy oder $R^1$
$R^4$, $R^5$ gleich oder verschieden, gegebenenfalls durch $C_1$—$C_4$-Alkyl, Methoxy, Chlor oder Fluor substituierte Arylreste,
$R^6$, $R^7$ gleich oder Verschieden entweder $R^4$ oder $R^5$ oder gegebenenfalls durch $C_1$—$C_4$-Alkyl, Methoxy, Chlor oder Fluor substituierte Alkylreste mit 1—C C-Atomen, Cycloalkylreste mit 5—7 C-Atomen und Wasserstoff,
$R^8$ Wasserstoff oder einen Silylrest der Formel II

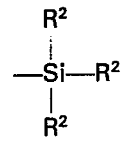
(II)

in dem $R^2$ die oben angegebene Bedeutung hat,
n für eine ganze Zahl von 1—20,
m für eine ganze Zahl von 0—10 und
p für O oder 1 steht,
$R^9$ und $R^{10}$, gleich oder verschieden, $R^2$ oder X und
$R^{11}$ Chlor, Hydroxy, Methoxy, Äthoxy oder X
bedeuten.

2. Verfahren nach Anspruch 1, dadurch gekennzeichnet daß $R^4$ und $R^5$ für Phenyl, Tolyl, p-tert-Butyl-phenyl, o-, p-Chlorphenyl, 2,4-Dichlorphenyl, Naphthyl, Bisphenyl oder m-Methoxyphenyl und $R^6$ und $R^7$ für $R^4$ bzw. $R^5$, Methyl, Äthyl oder Isopropyl stehen.

3. Verfahren nach Ansprüchen 1 oder 2, dadurch gekennzeichnet, daß der Silyläther eine Molekulargewicht Mn von 500—12000 aufweist.

**Revendications**

1. Procédé de production d'homo- ou de copolymères d'éthylène par polymérisation radicalaire à des températures d'au moins 100°C, à une pression de 203—3546 bars (20,3—354,6 mPa) et avec des éthers de silyle comme initiateurs, éventuellement en présence d'un solvant, caractérisé en ce qu'on utilise comme éthers de silyle des éthers de formule (1):

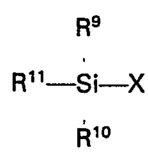
(I)

dans laquelle X représente

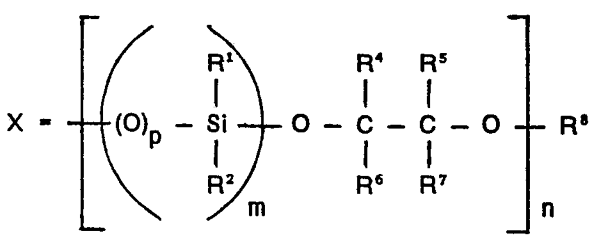

où
$R^1$ est un groupe méthyle, éthyle, phényle, benzyle ou chlorométhyle,
$R^2$ est du chlore ou un groupe hydroxyle, méthoxy, éthoxy ou $R^1$
$R^4$ et $R^5$, égaux ou différents, représentent des restes aryle éventuellement substitués par un radical alkyle en $C_1$ à $C_4$, un radical méthoxy, du chlore ou du fluor,
$R^6$ et $R^7$, égaux ou différents, représentent $R^4$ ou $R^5$ ou des restes alkyle ayant 1 à 6 atomes de carbone éventuellement substitués par un radical alkyle en $C_1$ à $C_4$, un radical méthoxy, du chlore ou du fluor, des restes cycloalkyle ayant 5 à 7 atomes de carbone et de l'hydrogène,
$R^8$ est de l'hydrogène ou un reste silyle de formule (II)

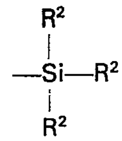

(II)

dans laquelle $R^2$ a la définition donnée ci-dessus,

*n* est un nombre entier de valeur 1—20,

*m* est un nombre entier de valeur 0—10, et

*p* est égal à 0 ou 1,

$R^9$ et $R^{10}$, égaux ou différents, représentent $R^2$ ou X et

$R^{11}$ représente du chlore ou un radical hydroxy, méthoxy, éthoxy ou X.

2. Procédé suivant la revendication 1, caractérisé en ce que $R^4$ et $R^5$ sont des groupes phényle, tolyle, p-tertiobutylphényle, o-chlorophényle, p-chlorophényle, 2,4-dichlorophényle, naphtyle, bisphényle ou m-méthoxyphényle et $R^6$ et $R^7$ représentent $R^4$ et $R^5$, un groupe méthyle, un groupe éthyle ou un groupe isopropyle.

3. Procédé suivant la revendication 1 ou 2, caractérisé en ce que l'éther de silyle a un poids moléculaire Mn de 500 à 12000.

## Claims

1. Process for the production of homopolymers or copolymers of ethylene by radical polymerisation at temperatures of at least 100°C, under a pressure of from 203 to 3546 bars and using silyl ethers as initiators, optionally in the presence of a solvent, characterised in that the silyl ethers used are those of the formula I

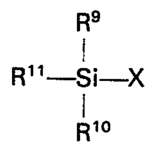

(I)

wherein

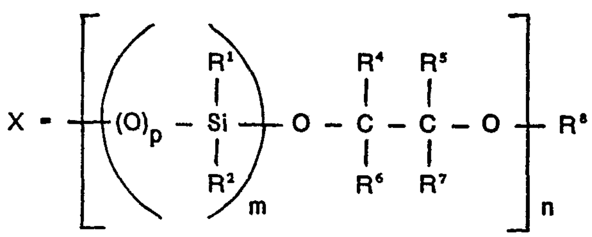

in which

$R^1$ represents methyl, ethyl, phenyl, benzyl or chloromethyl,

$R^2$ represents chlorine, hydroxyl, methoxy, ethoxy or $R^1$

$R^4$ and $R^5$ are the same or different and represent aryl radicals optionally substituted by $C_1$—$C_4$-alkyl, methoxy, chlorine or fluorine.

$R^6$ and $R^7$ are the same or different and either have the same meaning as $R^4$ or $R^5$ or represent $C_1$—$C_6$-alkyl radicals optionally substituted by $C_1$—$C_4$-alkyl, methoxy, chlorine or fluorine, cycloalkyl radicals containing from 5 to 7 carbon atoms and hydrogen,

$R^8$ represents hydrogen or a silyl radical of the formula II

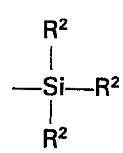

(II)

wherein $R^2$ has the meaning given above,

n represents an integer of from 1 to 20,

m represents an integer of from 0 to 10 and

p represents 0 or 1,
$R^9$ and $R^{10}$, which are the same or different, denote $R^2$ or X and
$R^{11}$ denotes chlorine, hydroxyl, methoxy, ethoxy or X.

2. Process according to claim 1, characterised in that $R^4$ and $R^5$ represent phenyl, tolyl, p-tert-butyl phenyl, o-chlorophenyl, p-chlorophenyl, 2,4-dichlorophenyl, naphthyl, bisphenyl or m-methoxy phenyl and $R^6$ and $R^7$ represent $R^4$ or $R^5$, or methyl, ethyl or isopropyl.

3. Process according to claims 1 or 2, characterised in that the silyl ether has a molecular weight Mn of from 500—12,000.